# EUROPEAN PATENT APPLICATION

(11) **EP 3 779 633 A1**
(43) Date of publication of application: **17.02.2021**
(21) Application number: 19864116.9
(22) Date of filing: 16.01.2019
(51) Int. Cl.: G05D 1/02, B61D 3/20

(54) **SMART CONTAINER RAILWAY FLATCAR CONTROL SYSTEM AND RAILWAY FLATCAR**

(30) Priority: 30.09.2018 CN 201811159405
(71) Applicant: China Railway Major Bridge Reconnaissance & Design Institute Co., Ltd., Wuhan, Hubei 430000 (CN); China Railway Wuhan Survey and Design Co., Ltd., Wuhan, Hubei 430074 (CN)
(72) Inventor: FANG, Yafei, Wuhan, Hubei 430074 (CN); GAO, Zongyu, Wuhan, Hubei 430074 (CN); XIAO, Yusong, Wuhan, Hubei 430074 (CN); MEI, Dapeng, Wuhan, Hubei 430074 (CN); LIU, Changyu, Wuhan, Hubei 430074 (CN); WANG, Zengli, Wuhan, Hubei 430074 (CN); HUANG, Zexing, Wuhan, Hubei 430074 (CN); ZHANG, Jianan, Wuhan, Hubei 430074 (CN); LI, Rui, Wuhan, Hubei 430074 (CN); CAI, Yunfeng, Wuhan, Hubei 430074 (CN); GONG, Xue, Wuhan, Hubei 430074 (CN); WU, Bobo, Wuhan, Hubei 430074 (CN); CAI, Jiajun, Wuhan, Hubei 430074 (CN)
(74) Representative: Hanna Moore + Curley
(86) International application number: PCT/CN2019/071956
(87) International publication number: WO 2020/062724

(57) **Abstract**

Provided are a smart rail flatcar for containers control system and rail flatcar; the autonomous-driving rail flatcar performs transport operations on the rail; the rail flatcar is monitored in real-time by means of a positioning module and a remote monitoring module, and the rail flatcar uses the coils in the rail to charge the rail flatcar, by means of electromagnetic induction, at any time during the process of operation; the rail flatcar runs continuously and without stopping, is charged anytime and anywhere during the process of operation, and has zero emissions and is environmentally friendly and energy-saving.

## Description

### Technical Field

The invention belongs to the technical field of container transportation, and particularly relates to a smart rail flatcar for containers control system and a rail flatcar.

### Background Art

At present, container trucks are generally adopted as short-distance container transferring forms in container central stations, ports, freight yards and other occasions in China, and unmanned container trucks appear in more advanced places. Or the car is driven by a person such that a driver needs to be specially equipped and the working efficiency is limited by personnel proficiency hard to control. With the rapid arrival of the information society, the development trend of industrial application technology in the future inevitably has the features of being unmanned, autonomous, efficient and fast. Unmanned container trucks in the last two years have realized autonomous operation, but there are many shortcomings one of which worth noticing is that the power storage battery charging needs to exit the flatcar transport operation to a fixed position at a regular time. Charging at a certain position and a certain time consumes a lot of operation time and reduces the operation efficiency.

### Summary of the Invention

It is an object of the present invention to overcome the problem of inefficient operation of prior art unmanned container trucks.

Therefore, the invention provides a smart rail flatcar for containers control system which comprises an autonomous driving module, a positioning module, a wireless communication module, a control module, a remote monitoring module and a contactless charging power supply; wherein
the positioning module is used for positioning the position of the rail flatcar in real time;
the remote monitoring module is used for monitoring the position and the operation state of the rail flatcar in real time;
the wireless communication module is used for establishing a communication connection between the rail flatcar and the remote monitoring module;
the autonomous driving module is used for controlling the driving direction and speed of the rail flatcar;
the contactless charging power supply module comprises a storage battery and a charging pile group, wherein the charging pile group is provided with a primary coil group, and the storage battery is provided with a secondary coil corresponding to the primary coil group, and the contactless charging power supply module is used for supplying power to the positioning module, the wireless communication module, the control module and the autonomous driving module; and the control module is used for controlling the operation of the autonomous driving module and the contactless charging power supply module.

Preferably, an alarm module is further arranged, and the alarm module is used for monitoring the working states of the autonomous driving module, the positioning module, the wireless communication module, the control module, the remote monitoring module and the contactless charging power supply module module.

Preferably, when the electric quantity of the storage battery is lower than a preset threshold value, the control module controls the rail flatcar to run to the nearest charging pile for charging. Preferably, the positioning module includes GPS/GPRS positioning, inertial navigation, laser-assisted precise positioning, and an electronic map.

Preferably, the primary coil group comprises a plurality of sections of primary coils, which are laid on the rail at intervals, and the lower end of the car body is provided with a secondary coil corresponding to the primary coil.

Preferably, the distance of the secondary coil from the upper surface of the rail is no less than a dimension specified by the lower limit of the railway rolling stock, and the height of the primary coil from the new rail surface is no greater than the maximum value specified by rail surface wear. The invention also provides a smart rail flatcar for containers characterized by comprising a car body, wherein traction ends are arranged at two ends of the car body, and further comprising the control system as claimed in claims 1 to 6, wherein the control system controls the traction ends to move along a rail.

Preferably, the front end and rear end of the rail flatcar are respectively provided with a laser ranging sensor and/or an ultrasonic ranging sensor.

Preferably, a rectification filter and a resonance inverter are arranged on the rail and an external power supply is electrically connected with the rectification filter, the resonance inverter and the primary coil group in sequence.

Preferably, a coupler is arranged on a traction head of the rail flatcar and two adjacent rail flatcars are connected by a coupler.

The invention has the beneficial effects that: according to the smart rail flatcar for containers control system and the rail flatcar provided by the invention, the autonomous driving rail flatcar carries out transporting operations on a rail; on the one hand, the rail flatcar is monitored in real time by the positioning module and the remote monitoring module; and on the other hand, the rail flatcar is charged in an electromagnetic induction mode by a coil in the rail at any time in the operation process such that the rail flatcar continuously runs without stopping and the rail flatcar is charged in the operation process at any time and any place and zero-emission and environmentally friendly and energy-saving effect are realized.

The present invention will now be described in further detail with reference to the accompanying drawings.

### Brief Description of the Drawings

Fig. 1 is a schematic diagram of a smart rail flatcar for containers control system module of the present invention;
Fig. 2 is a schematic diagram showing the operation principle of the smart rail flatcar for containers of the present invention; and
Fig. 3 is a schematic diagram showing the principle of a contactless charging circuit of the smart rail flatcar for containers of the present invention.

### Detailed Description of the Invention

The technical solutions of the embodiments of the present invention will now be described more clearly and fully hereinafter with reference to the accompanying drawings of the embodiments of the present invention. Apparently, the illustrated embodiments are merely part of, not all of, embodiments of the present invention. Based on the embodiments of the present invention, all other embodiments obtained by one of ordinary skill in the art without involving any inventive efforts are within the scope of the present invention.

In describing the present invention, it is to be understood that terms of "center", "upper", "lower", "front", "rear", "left", "right", "vertical", "horizontal", "top", "bottom", "inner", "outer" and like indicating an orientational or positional relationship are based on the orientational or positional relationship shown in the drawings for ease of description and simplicity of description, and are not intended to indicate or imply that the device or element referred to must have a particular orientation, be constructed and operated in a particular orientation, and thus should not be construed as limiting the invention.

The terms "first" and "second" are used for descriptive purposes only and are not to be construed as indicating or implying relative importance or implicitly indicating the number of technical features indicated. Therefore, features defining "first" and "second" may explicitly or implicitly include one or more of the features. In the description of the present invention, unless otherwise specified, the meaning of "a plurality" is two or more.

### Embodiment 1:

The embodiment of the invention provides a smart rail flatcar for containers control system which comprises an autonomous driving module, a positioning module, a wireless communication module, a control module, a remote monitoring module and a contactless charging power supply. The positioning module is used for positioning the position of the rail flatcar in real time; the remote monitoring module is used for monitoring the position and the operation state of the rail flatcar in real time; the wireless communication module is used for establishing communication connection between the rail flatcar and the remote monitoring module; the autonomous driving module is used for controlling the driving direction and speed of the rail flatcar; the contactless charging power supply module comprises a storage battery and a charging pile group, wherein the charging pile group is provided with a primary coil group and the storage battery is provided with a secondary coil corresponding to the primary coil group; the contactless charging power supply module is used for supplying power to the positioning module, the wireless communication module, the control module and the autonomous driving module; and the control module is used for controlling the operation of the autonomous driving module and the contactless charging power supply module.

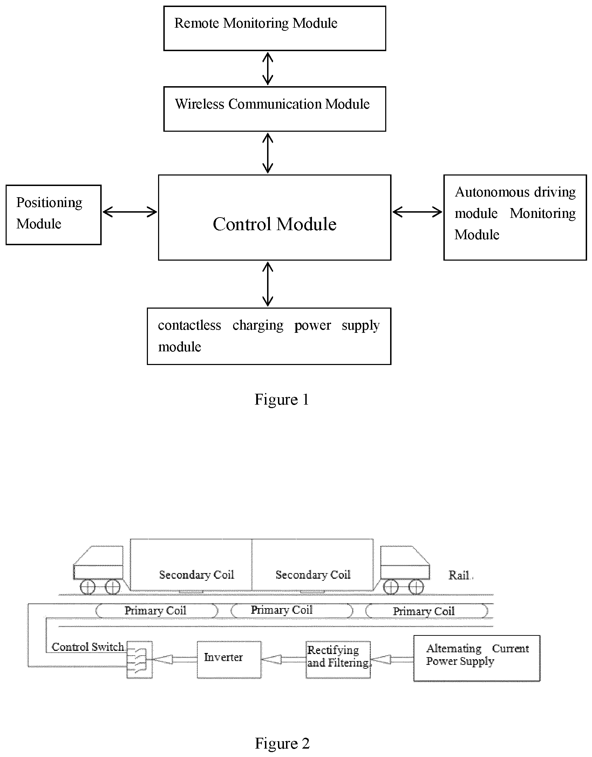

Therefore, as shown in figures 1 and 2, the rail flatcar runs on a rail and communicates with a remote monitoring module by a wireless communication module such that a remote worker can monitor the operation state of the rail flatcar on-site in real time and particularly monitor the electric quantity of the rail flatcar on the rail in real time. Wherein the wireless communication module comprises WiFi, 4G, or radio waves and the remote monitoring module comprises a computer and a signal receiving end. The remote rail flatcar is thus controlled by a computer. The rail flatcar is arranged with a control module, which comprises a singlechip through which the positioning module, the autonomous driving module and the contactless charging power supply module are controlled. The positioning module comprises a GPS positioning system or a Beidou positioning navigation system. The autonomous driving module comprises an image recognition chipset, an ultrasonic sensor, an infrared sensor, radar and the like, and the motor of the rail flatcar is controlled in real time through data of the sensors, and then autonomous driving of the rail flatcar is realized. When the remote monitoring module detects that the electric quantity of the rail flatcar is insufficient, an instruction is sent to the control module, and the control module controls the contactless charging power supply module to start charging. Specifically, the contactless charging power supply module comprises a storage battery and a charging pile group, wherein the charging pile group is provided with a primary coil group, and the charging pile group is arranged on a rail, and the storage battery is provided with a secondary coil corresponding to the primary coil group. When alternating current is conducted on the primary coil, current can be formed on the secondary coil through electromagnetic induction such that the charging process can be realized and the on and off of charging is controlled by a control module. Because the charging mode is contactless, the rail flatcar can be charged while working.

The storage battery powered rail flatcar for containers running on a rail comprises an integrated car body consisting of two end car bodies and an intermediate container transporting car body. The intermediate car body can be loaded with two 20 ft containers or a 40 ft container, wherein the full name of 20 ft is a 20 ft container, namely a 20 ft container and a small cabinet, and the 40 ft is a 40 ft container and a large cabinet. A two-shaft bogie is arranged below the two end bodies respectively, and a center plate connection is arranged between the two-shaft bogie and the end body framework.

Preferably, the smart rail flatcar for containers control system is further provided with an alarm module, and the alarm module is used for monitoring the working states of the autonomous driving module, the positioning module, the wireless communication module, the control module, the remote monitoring module and the contactless charging power supply module. When any one of the autonomous driving module, the positioning module, the wireless communication module, the control module, the remote monitoring module and the contactless charging power supply module fails, an alarm is started, and a remote worker can control the rail flatcar to exit from an operation site or stop to wait for overhauling.

Preferably, when the electric quantity of the storage battery is lower than a preset threshold value, the control module controls the rail flatcar to run to the nearest charging pile for charging. Therefore, the rail flatcar is controlled to carry out static charging to the nearest charging pile so that the charging can be filled fastest and the charging can also be carried out while working. Preferably, the positioning module comprises GPS/GPRS positioning, inertial navigation, laser-assisted precise positioning and an electronic map.

Preferably, the primary coil group comprises a plurality of sections of primary coils that are laid on rails at intervals, and the lower end of the car body is provided with a secondary coil corresponding to the primary coil. It can be seen therefrom that after the input power source acquires electric energy from the distribution substation, and after being rectified and filtered by the first rectifying and filtering circuit, the direct current is output to a high-frequency inverter. The generated high-frequency alternating current is input to the primary coil winding of a separated coupling transformer under the control of a control switch, and the primary coil winding is an independent sectional power supply coil laid in a rail parallel to the rail. The primary coil winding generates coupling high-frequency alternating magnetic flux in the adjacent space, and the secondary coil winding located on the underframe of the rail flatcar obtains induced electromotive force through the high-frequency alternating magnetic flux generated by inductive coupling, and the car-mounted storage battery is quickly charged after the second rectifying and filtering circuit is passed. The charging system exchanges energy through the separated coupling transformer so that the rail flatcar can be charged at any time in operation.

Preferably, the distance of the secondary coil from the upper surface of the rail is no less than a dimension specified by the lower limit of the railway rolling stock, and the height of the primary coil from the new rail surface is no greater than a maximum specified by the rail surface wear. It can be seen therefrom that the upper surface of the rail refers to the highest surface of the rail, referred to as the rail surface for short, and the dimension specified by the lower limit of the railway rolling stock is specified in the metro limit or the standard gauge railway rolling stock limit so that the distance between the primary coil and the rail surface cannot be less than the dimension specified by the lower limit of the railway rolling stock and the primary coil is prevented from contacting the rail surface. On the other hand, the height of the primary coil positioned on the rail from the rail surface is not greater than the maximum value specified by the rail surface wear. As the rail surface is abraded during operation, the abrasion degree does not exceed the maximum value specified by a rail surface wear after the railway is finished. Therefore, the height of the primary coil from the rail surface is not greater than the maximum value specified by the rail surface abrasion so that it is guaranteed that the primary coil cannot touch a locomotive to cause accidents.

The invention has the beneficial effects that: according to the smart rail flatcar for containers control system and the rail flatcar provided by the invention, the autonomous driving rail flatcar carries out transporting operations on a rail; on the one hand, the rail flatcar is monitored in real time by the positioning module and the remote monitoring module; and on the other hand, the rail flatcar is charged in an electromagnetic induction mode by a coil in the rail at any time in the operation process such that the rail flatcar continuously runs without stopping and the rail flatcar is charged in the operation process at any time and any place and zero-emission and environmentally friendly and energy-saving effect are realized.

### Embodiment 2:

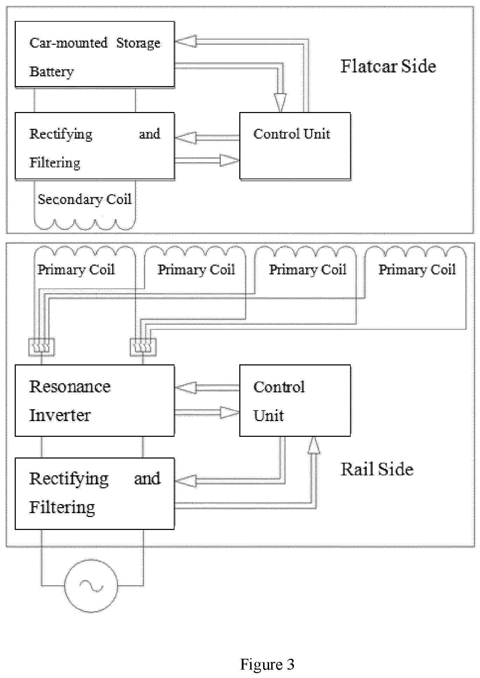

The embodiment of the invention provides a smart rail flatcar for containers which comprises a car body, wherein traction ends are arranged at two ends of the car body, and further comprises a control system of Embodiment 1, wherein the control system controls the traction ends to move along the rail. As shown in figures 2 and 3, on the rail side, alternating current passes through a rectifying and filtering circuit and then passes through an inverter, and finally supply power for the primary coil by a control switch. The control switch controls by a control unit. On the flatcar side, the current is generated between the secondary coil and the primary coil through electromagnetic induction and then power is supplied to the car-mounted storage battery through rectification filter. The car-mounted storage battery and the rectification filter are controlled by a control unit, and the control unit belongs to a control module.

Preferably, the front and rear ends of the rail flatcar are provided with a laser ranging sensor and/or an ultrasonic ranging sensor. The sensors serve to assist in positioning and navigation.

Preferably, a coupler is arranged on the traction head of the rail flatcar and two adjacent rail flatcars are connected through the coupler. A plurality of rail flatcars can be connected by a coupler to realize the function of connecting and hanging. In addition, a plurality of adjacent rail flatcars can be autonomousally grouped and synchronously operated under the control of a network.

The invention has the beneficial effects that: according to the smart rail flatcar for containers control system and the rail flatcar provided by the invention, the autonomous driving rail flatcar carries out transporting operations on a rail; on the one hand, the rail flatcar is monitored in real time by the positioning module and the remote monitoring module; and on the other hand, the rail flatcar is charged in an electromagnetic induction mode by a coil in the rail at any time in the operation process such that the rail flatcar continuously runs without stopping and the rail flatcar is charged in the operation process at any time and any place and zero-emission and environmentally friendly and energy-saving effect are realized.

The above examples are merely illustrative of the present invention and are not to be construed as limiting the scope of the present invention, and all designs that are the same as or similar to the present invention are intended to be within the scope of the present invention.

## Claims

1. A smart rail flatcar for containers control system, **characterized by** comprising an autonomous driving module, a positioning module, a wireless communication module, a control module, a remote monitoring module and a contactless charging power supply module; wherein
the positioning module is used for positioning the position of the rail flatcar in real time;
the remote monitoring module is used for monitoring the position and the operation state of the rail flatcar in real time;
the wireless communication module is used for establishing a communication connection between the rail flatcar and the remote monitoring module;
the autonomous driving module is used for controlling the driving direction and speed of the rail flatcar;
the contactless charging power supply module comprises a storage battery and a charging pile group, wherein the charging pile group is provided with a primary coil group, and the storage battery is provided with a secondary coil corresponding to the primary coil group, and the contactless charging power supply module is used for supplying power to the positioning module, the wireless communication module, the control module and the autonomous driving module; and the control module is used for controlling the operation of the autonomous driving module and the contactless charging power supply module.

2. The smart rail flatcar for containers control system according to claim 1, **characterized in that** an alarm module is further provided, wherein the alarm module is used for monitoring the working states of the autonomous driving module, the positioning module, the wireless communication module, the control module, the remote monitoring module and the contactless charging power supply module.

3. The smart rail flatcar for containers control system according to claim 1, **characterized in that** when the electric quantity of the storage battery is lower than a preset threshold value, the control module controls the rail flatcar to run to the nearest charging pile for charging.

4. The smart rail flatcar for containers control system according to claim 1, **characterized in that** the positioning module comprises GPS/GPRS positioning, inertial navigation, laser-assisted accurate positioning and an electronic map.

5. The smart rail flatcar for containers control system according to claim 1, **characterized in that** the primary coil group comprises a plurality of sections of primary coils, wherein the plurality of sections of the primary coils are paved on the rail at intervals and a secondary coil corresponding to the primary coil is arranged at the lower end of a car body.

6. The smart rail flatcar for containers control system according to claim 5, **characterized in that** the distance between the secondary coil and the upper surface of the rail is no less than the dimension specified by the lower limit of the railway rolling stock, and the height between the primary coil and the new rail surface is not larger than a maximum value specified by rail surface wear.

7. A smart rail flatcar for containers, **characterized by** comprising a car body, wherein traction ends are arranged at two ends of the car body, and further comprising the control system as claimed in claims 1 to 6, wherein the control system controls the traction ends to move along a rail.

8. The smart rail flatcar for containers according to claim 7, **characterized in that** the front end and rear end of the rail flatcar are respectively provided with a laser ranging sensor and/or an ultrasonic ranging sensor.

9. The smart rail flatcar for containers according to claim 7, **characterized in that** a rectification filter and a resonance inverter are arranged on the rail and an external power supply is electrically connected with the rectification filter, the resonance inverter and the primary coil group in sequence.

10. The smart rail flatcar for containers according to claim 7, **characterized in that** a coupler is arranged on a traction head of the rail flatcar and two adjacent rail flatcars are connected by a coupler.
